# EUROPEAN PATENT SPECIFICATION

(11) **EP 1 959 637 B1**
(45) Date of publication and mention of the grant of the patent: **12.08.2009**
(21) Application number: 07102594.4
(22) Date of filing: 16.02.2007
(51) Int. Cl.: H04L 29/08, H04L 12/18

(54) **Method and apparatus for session aware connectivity control**
Verfahren und Vorrichtung für sitzungsbewusste Konnektivitätssteuerung
Procédé et appareil de contrôle de connectivité sensible à la session

(43) Date of publication of application: 20.08.2008
(73) Proprietor: NTT DoCoMo, Inc., Tokyo (JP)
(72) Inventor: Mendes, Paulo, 81673, Munich (DE); Cerqueira, Eduardo, 3030-049, Coimbra (PT); Curado, Marilia, 3030-393, Coimbra (PT); Monteiro, Edmundo, 3030-393, Coimbra (PT)
(74) Representative: Betten & Resch

(56) References cited:
- EP-A2- 1 134 933
- WO-A-20/05114431
- US-A1- 2002 143 951

## Description

### FIELD OF INVENTION

This invention addresses the field of the control of the connectivity of unicast and multicast sessions over heterogeneous environments.

### BACKGROUND OF THE INVENTION

Next generation wireless networks are envisioned to support diverse types of real-time group communication services over heterogeneous environments, where hosts or networks can support different transport technologies. Services destined to multiple users, such as mobile IPTV, file distribution and push media, can be composed by a set of flows and distributed for several mobile users at the same time. Therefore, from the transport point of view, multicast is the most suitable technology to disseminate the content of sessions to multiple users (multi-user sessions), avoiding packet duplication and saving network resources (see e.g. RFC 3170).

However, due to the existence of domains with local schemes to create distribution trees (e.g. multicast tree with local scope), and mobile users and operators with the same or different address realms (e.g. in the field of IP multicast field, domains may support *Any-Source Multicast* (ASM, see e.g. RFC 3678), *Small-Group Multicast* (SGM, see e.g. R. Boive, N. Feldman and C. Metz, "Small Group Multicast: A New Solution for Multicasting on the Internet", IEEE Internet Computing, vol. 4, issue: 3, May 2000, pp. 75-79) or *Source-Specific Multicast* (SSM, see RFC 4607)), it is needed a mechanism to control the end-to-end connectivity of distribution trees along the session-path, avoiding any discontinuity points during the session communication. In addition, the next generation wireless networks will be dynamic and unpredictable (e.g. due to link failure, mobility of users and network congestion), and distribution trees may become partitioned or inefficient (e.g. the existence of more than one ingress point for the same session in the same multi-homed access domain). In this context, it is required the creation of inter-domain distribution trees with an efficient shape, allowing the construction of long distribution trees.

The distribution of multi-user sessions to groups of fixed or mobile users over heterogeneous environments has been solved for situations where centralised or distributed agents are responsible for creating tunnels between multicast domains, which allows the dissemination of multicast session content over non-multicast networks. These solutions are focused on networks and hosts with IP multicast capability, restricting their usage only to multicast-aware users or mobile users connected to networks with IP multicast support. At the same time, previous approaches require the installation of proprietary agents on the end-users to encapsulate and/or decapsulate multicast packets sent over unicast links, decreasing thus the system flexibility. Furthermore, other solutions do not support the connectivity of sessions between networks with the same and different address realms. An example of these cases is the connectivity between domains with the same multicast model that use different schemes to create multicast trees. Moreover, the construction of distribution trees with efficient shape over heterogeneous environments is not supported by the existing approaches.

In order to solve the problem of the distribution of multi-user sessions to groups of fixed or mobile users over heterogeneous environments, there is the need for a session-aware mechanism that controls the connectivity of multi-user sessions between domains with the same and different address realms, independently of the mobile end-user or network technology. Moreover, it should preferably control the shape of inter-domain distribution trees as well as avoid the reconstruction of the entire session path due to the movement of hosts or networks or failure in the network. Furthermore, the connectivity control mechanism should preferably avoid the installation of proprietary modules on the end-users or changes in standards. Additionally, the use of open interfaces is preferable, allowing simultaneously an easy interaction with different protocols and mechanisms and a straightforward deployment.

Several approaches have addressed the connectivity of sessions between domains with the same or different address realms. However, existing solutions require the implementation of agents on the end-hosts or modification of IETF standards to map unicast packets to multicast packets and vice-versa, decreasing thus the flexibility of the system and their deployment in the networks (see e.g. J. Park et al, "Multicast Delivery Based on Unicast and Subnet Multicast", IEEE Communications Letters. Vol. 5, N. 4, April 2001, pp 181-183, or EP 1680886). Furthermore, several solutions use a tunnel-based approach to send multicast packets for multicast users over unicast links, restricting their usage only to multicast hosts placed in multicast-aware networks (see e.g. B. Zhang, S. Jamin and L. Zhang, "Host Multicast: A Framework for Delivering Multicast to End Users", Proceedings of the Twenty-First Annual Joint Conference of the IEEE Computer and Communications Societies - INFOCOM 2002. June 2002, pp. 1366-1375). The unidirectional translation from multicast packets to unicast packets is outlined in E. Pearce, D. Whetten and L. Michalewicz, "System and Method for Enabling Multicast Telecommunications", Application Patent Number US7079495 B1, July 2006, while the opposite procedure is described in L. Begeja, "System and Method for Delivering Content in a Unicast/Multicast Manner", Application Patent Number US708142 B1, July 2005.. However, unidirectional translation solutions are not suitable to operate over heterogeneous environments.

In addition, translation-based approaches use agents in specific places of the networks to allow the delivery of multicast content over non-multicast links, by translating multicast packets inside unicast packets and vice-versa (see e.g. D. Thaler et al, "Automatic IP Multicast without Explicit Tunnels (ATM)", IETF Internet Draft, October 2005). However, this scheme requires that both end-hosts and access networks have IP multicast capabilities. Furthermore, other translation-based solutions do not provide the connectivity of sessions between networks with the same address realms (see e.g. US-Patent 7031326 B1, April 2006). An example of this connectivity scheme is the linkage of different multicast trees supported by several domains, which are associated with the same distribution tree along the end-to-end session path. The translation of IPv6 multicast sessions between domains with *PIM Sparse Mode* (PIM-SM) model is proposed in M. In et all, "An Efficient Mechanism for Multicast Deployment in IPv6", The 8th International Conference Advanced Communication Technology (ICACT 2006), Vol. 03, February 2006, pp. 2008-2011. However, this proposal does not support the connectivity of sessions between domains with different address realms. The distribution of unicast or multicast session content to users connected to wireless networks has been presented in W. Park et al "An Implementation of the Broadband Home Gateway Supporting Multi-Channel IPTV Service", Proceeding of IEEE 10th International Symposium on Consumer Electronics - ISCE 2006, June 2006, pp. 1-5, and in S. Sakane et all, "A Translation method between 802.15.4 nodes and IPv6 nodes". Proceedings of the International Symposium on Applications and the Internet Workshop (SAINTW'06), January 2006, pp. 34-37. In the first proposal there is only translation from Layer 3 multicast packets to Layer 2 multicast packets and, in the second approach, there is the mapping of IPv6 packets to IEEE 802.15.4 packets and vice-versa. However, both solutions do not support the packet translation between unicast and multicast domains. Finally, I. Romdhani, H. Bettarhar and A. Bouabdallah, "Transparent Handover for Mobile Multicast Sources", IEEE International Conference on Networking, International Conference on Systems and International Conference on Mobile Communications and Learning Technologies, April 2006, pp. 145-152; proposes a tunnel-based solution, which is focused on multicast-aware environments, to avoid the reconstruction of the entire multicast tree due to the mobility of multicast sources to multicast networks. Nevertheless, this scheme requires changes in the PIM-SM Rendezvous Point and on the mobile devices, and does not allow the connectivity of sessions between heterogeneous environments.

In this context, existing solutions do not satisfy all requirements to control the connectivity of multi-user sessions between domains with the same and different address realms. Furthermore, in previous proposals, the shaping of distribution trees is restricted to multicast-aware environments. Finally, changes on the end-hosts or standards as well as the use of tunnel-based approaches decrease the flexibility of the proposed systems and their feasible deployment.

US 2002/0143951 discloses a method and system for sending multicast information to a user. It uses agents, network programs, that reside on multicast-enabled computers.

### SUMMARY OF THE INVENTION

The present invention is defined in the independent claims. The dependent claims define embodiments of the invention.

According to one embodiment there is provided a method for session-aware connectivity control in heterogeneous networks, comprising:
assigning a unique global session identifier along the end-to-end path to each multi-user session;
publishing by said sender of unicast or multicast sessions information about the available sessions including the global session identifier and information about the session-flows and the source address to a network agent to which it is connected or to which it is moving to in order to enable subscription to said sessions by a receiver; whereas further network agents are provided along the session path, whereas said network agents comprise:
   an address allocation controller interface for enabling the request of the allocation of a local channel identifier to which a multi-user session flow is associated inside or between domains;
   said method further comprising:
      maintaining state about the multi-user sessions whereas said state includes per-session and per-flow state about the current sessions in a domain or between domains to which a network agent is associated; whereas
      said network agents are distributed along said session path, and said method comprises:
         receiving by an ingress network agent one or more sessions from said source and
         publishing information about said sessions from said source and forwarding it downstream along further network agents towards receivers;
         sending from a receiver via an application protocol a subscribe message through an access agent towards said source indicating that the receiver wishes to subscribe the session and forwarding said message upstream towards said source along the network agents located in the session path;
         in each network agent where said request is received, verifying by querying said state information if the requested session is already received by said network agent, and if not, forwarding said subscribe message further upstream;
         if the session is found to be received by an network agent, stop forwarding upstream said subscribe message and verifying if the session is already active towards the receiver;
         if said verification is positive, forwarding said subscribe message downstream towards a network agent of a domain to which said access agent belongs;
         if said verification is negative, performing the following steps:
            a) requesting from the address allocation controller interface the allocation of a channel identifier for the downstream session flow and updating the outgoing interface table of said network agent with said channel identifier and the address of the next network agent towards the receiver;
            b) in the next network agent downstream towards the receiver, updating the incoming interface table with information about the session identifier and channel identifier, requesting the allocation of a channel identifier for the downstream session flow and
         updating the outgoing interface table said network agent with said channel identifier and the address of the next network agent towards the receiver;
         verifying whether the access agent has been reached, and if this is not the case, repeating said steps a) and b) above until said access agent is received,
         if said access agent is reached, requesting from the address allocation controller interface the allocation of a channel identifier for the downstream session flow and
         updating the outgoing interface table of said network agent with said channel identifier and joining said session by said receiver through said access agent.

The method provides end-to-end session aware connectivity control over heterogeneous networks. Already existing distribution trees are made use of as far as possible, thereby increasing efficiency.

According to one embodiment said method comprises:
forwarding a subscribe message or a request message to establish a session along the network agents;
querying the state associated to the session and flows in each agent where the message is received, and
when a network agent detects from said querying that the connectivity of the requested multi-user session flows is already activated towards the upstream and/or downstream session path, trying to construct or reconstruct the connectivity in the path between itself and the next upstream and/or downstream agent towards the destination rather than end-to-end, whereas
said subscribe message is a message sent by a receiver to newly join a session and
the request message is a message sent by a source which has moved to a new access agent.
This enables using existing sessions and links for new subscription requests as well as in case of the movement of the source.

According to one embodiment said method further comprises:
if more than one network agent in an unicast aware domain or inter-domain link requires the same session flow, said method comprises:
   translating the packets and replicating them to these network agents.

According to one embodiment said maintained state information includes information about the domain identifier of the receiver where the session flow was requested and the address of the downstream agent associated with the session towards the domain of the receiver, and said method further comprising:
if a request for a session flow is received by a network agent, verifying based on a query of its state whether the session flow is already present in the domain of the requester;
if the connectivity exists already, forwarding the message to the next downstream agent until it reaches an ingress agent of the domain of the requester, and
if the subscribe request is from a new access agent or receiver, requesting the allocation of a channel identifier towards said new network agent or receiver and
updating an outgoing interface table with information about the new network agent or receiver.

According to one embodiment said network agent further comprises:
a connectivity control module which supports modules for multicast to unicast, multicast to multicast and unicast to unicast translation of packets; and said method further comprising:
   appropriately translating and if necessary replicating the packets by said modules in order to enable connectivity between different multicast schemes, connectivity between multicast and unicast, and connectivity between one unicast source and
   multiple unicast receivers.

According to one embodiment, if a further receiver sends a subscribe message for already active sessions through the same access agent, said access agent updates its outgoing interface table by including the port and destination IP of said further receiver and duplicates the incoming packets from said already active session to forward them to said further receiver.

According to one embodiment
the path of a session passes along multiple domains, and
said network agents are located at the edges of said domains.

### DESCRIPTION OF THE DRAWINGS

Fig. 1 schematically illustrates an embodiment according to the invention.
Fig. 2A and 2B schematically illustrate a further embodiment according to the invention.
Fig. 3 schematically illustrates a further embodiment according to the invention.
Fig. 4 schematically illustrates a further embodiment according to the invention.
Fig. 5 shows a flowchart which schematically illustrates a further embodiment according to the invention.

### DETAILED DESCRIPTION

In the following there will be described embodiments of the invention. Before starting with the description of the embodiments, at first some terms used in the following description are explained.

Domain: either a single network or a group of networks that is controlled by a common network administrator on behalf of a single administrative entity.

Downstream: in the same direction as the data flow.

Upstream: in the opposite direction of the data flow.

Session: a session defines the communication between a user (or user agent) and a peer. A session can be composed by one flow or a set of flows.

Multi-user session: session composed by a set of co-related flows that can be received by several users at the same time.

Distribution trees: a set of unicast flows or a multicast tree to which the flow of a session was associated in the domain or between domains.

Domain identifier: it is assumed that a domain identifier is a unique identifier used to identify a set of agents that belongs to the same domain, defined by manual configuration or using some self-organized scheme.

Session identifier: the session identifier is a global and unique value used to identifier a session along the end-to-end path.

Channel identifier: a set of values used to identify each session-flow in a domain or between domains. For example in unicast domains, a channel identifier can be composed by a pair of source and destination IP addresses, a pair of source and destination ports and the number of the transport protocol.

The embodiments of the invention relate to a mechanism for *Session-aware Connectivity Control* which will in the following be referred to as SEACON, and which performs session level multi-user session connectivity of distribution trees associated to flows of multi-user sessions over heterogeneous environments, where the devices of the end-users and/or networks support the same and/or different transport technologies, without changes on the end-hosts or standards. Therefore, it allows users to receive multi-user session content independently of the devices or networks transport technologies. For example, the SEACON mechanism provides the linkage of multi-user sessions from unicast to multicast domains and vice-versa, as well as the connectivity of multi-user sessions between multicast and unicast domains. Furthermore. the SEACON mechanism provides the translation between multicast domains that have the same or different address realms. In both cases SEACON allows the linkage of multicast trees build in different domains. This means that the end-to-end multicast is done by the concatenation of different multicast trees.

Moreover, the SEACON mechanism in one embodiment also controls the inter-domain shaping of distribution trees, which aims to build distribution trees with the branch point as close as possible to the users. The proposed mechanism also avoids the reconstruction of the entire session path due to the mobility of the receivers, senders or networks as well as network failure. In this context, the SEACON mechanism in one embodiment allows the distribution of multi-user sessions to several mobile users simultaneously, where each multi-user session can be composed by a set of flows, called session-flows.

The SEACON mechanism according to one embodiment is based on the has the following:
- The sender of unicast or multicast sessions defines the multi-user session description (called *session object),* which may have information about the session-flows, source address and a global session identifier as well as sufficient information to allow the subscription (e.g. by using the *Session Description Protocol* (SDP, RFC 2327));
- Each multi-user session has a unique global identifier along the end-to-end path;
- The existence of a IP multicast protocol to control multicast trees associated to flows of sessions in multicast-aware domains;
- The sender of unicast or multicast sessions provides information about the available sessions (including the session identifier) to a network agent to which it is connected or it is moving to. In case of mobility, this information can be exchanged between agents by using a session context transfer scheme [RFC 4067];
- The receiver gets the available multi-user sessions by any off-line or on-line means. For instance, via HTTP or receiving an advertisement via *Session Announcement Protocol* (SAP, RFC 2974);
- The receiver sends the session object, including its location/address to an agent in the network to which it is connected at the session setup time or to a new agent due to its mobility. In case of mobility, the session object can also be transferred between network agents by using a session context transfer scheme;

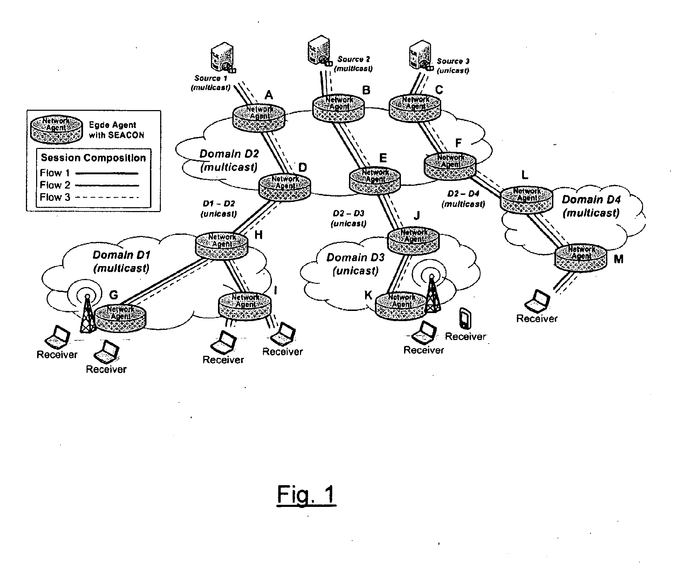

The SEACON functionalities are supported by an element or module hereinafter referred to as SEACON agent. SEACON agents are network agents which control the connectivity of multi-user sessions and the shaping of distribution trees between domains with the same or different address realms. A SECON agent can also be configured to control the connectivity and the shaping of sessions for a set of network agents inside or between domains. Figure 1 shows an example of the location of SEACON agents in a generic scenario and the basic functionalities supported by this mechanism. In the domain D1, the SEACON agents are placed at the edges, where the ingress agent H maps the incoming unicast session-flows (previously translated from multicast trees to unicast flows) into multicast trees and the SEACON agent G translates the layer 3 multicast packets to layer 2 multicast packets. The multicast packets associated with the multicast *Source* 2 are translated into unicast packets by agent E (between D2 and D3). Moreover, the incoming unicast packets in the ingress agent J are forwarded in a multicasting way (contributing to the shape of the distribution trees) to the access agent K that translates and replicates the IP unicast flows to a list of interested mobile receivers, for instance IEEE 802.15.4 devices located in a *Personal Area Network* (PAN).

Finally, the unicast packets associated with session-flows and sent by the *Source* 3 are translated, by agent C, into multicast trees with local scope inside D2. Since the inter-domain link between D2 and D4 has its own scheme to create edge-to-edge multicast trees (multicast trees with inter-domain scope), the multicast flows are mapped into inter-domain multicast trees. The same procedure occurs inside D4, where the ingress L translates all packets associated with the inter-domain multicast trees to new multicast trees created for the session-flows inside the domain. If a unicast-aware receiver moves to the access agent M and wants to join the session-flows of *Source 3,* a unicast connection is created from SEACON agent M and the new receiver.

The SEACON multi-user session connectivity and the inter-domain shaping of distribution trees over heterogeneous environments in one embodiment are achieved through the use of open interfaces. The interfaces allow the interaction with external protocols or mechanisms, an easy deployment and the SEACON applicability to heterogeneous environments. The main components of the SEACON scheme according to one embodiment are the following:
- SEACON Interfaces:
   o Session/application interface: An external session/application protocol or mechanism uses this interface to request the shaping and the connectivity control of multi-user sessions, by requesting the creation, replication, deletion, modification or refreshment of the multi-user session connectivity and shaping of distribution trees over heterogeneous environments. For example, in periods of network congestion, a QoS adaptation mechanism can use this interface to request the release of low priority session-flows associated to several distribution trees. In addition, a protocol or mechanism can request the connectivity of session-flows between domains with the same or different address realms as well as the replication of the incoming packets to a list of interested mobile users. When SEACON finishes its job, it uses the same interface to send a response to the requester. Based on the response, the session/application protocol or mechanism can trigger a network protocol or mechanism to control the resources and the management of distribution trees associated to session-flows inside and between domains (e.g. the session/application mechanism triggers the *Protocol Independent Multicast* for SSM (PIM-SSM, RFC 2579) to control the multicast trees associated to each session-flow inside or between multicast domains). In addition, the session/application mechanism or protocol can use the SEACON response to inform multicast-aware hosts about the multicast channels that must be joined for each session-flow (e.g. by using a standard protocol, such as the Session *Initiation Protocol* (SIP, RFC 3261));
   o Address Allocation Controller interface: This interface is used to request the allocation of a channel identifier to each a multi-user session-flow is associated inside or between domains to an external address allocation controller protocol or mechanism. For instance, a multicast SSM channel composed by one source and one multicast group or a pair of IP unicast addresses and transport ports (if the domain or host is unicast-aware) can be allocated to identify each session-flow inside or between domains. Based on this information, SEACON is able to translate session-flows between domains with the same or different address realms. Furthermore, when there are no more interested users in a session-flow (e.g. due to the mobility of the users), SEACON interacts with the external address allocation controller protocol or mechanism to release the channel identifier associated with each flow;
   o Firewall controller interface: This interface allows the communication between hosts across networks, even in the presence of firewall agents along the session path. SEACON uses this interface to inform the firewall mechanism about the incoming multi-user session-flows, allowing the configuration of the local policy rules and consequently the access to multi-user session content to users behind firewalls schemes. When there are no more interested users in a session-flow, SEACON interacts with the firewall to inform about the released session-flows.
- Connectivity Control mechanism: This translation-based mechanism can be configured to control the connectivity of multi-user sessions inside and/or between domains with the same and/or different address realms. For instance, the translation of packets between domains with different multicast models or the translation and replication of multicast packets to a list of unicast mobile users. With this goal, this mechanism supports several modules as follows:
   o Multicast <-> Unicast module: This module translates multicast packets to unicast and vice-versa, allowing the distribution of multi-user session content between domains with different address realms. If a unicast-aware user is connected to a multicast-aware domain (e.g. due to a handover), a unicast connection from a SEACON agent is created to allow the delivery of session-flows independently of the user or network address realms.
   o Multicast <-> Multicast module: This module translates multicast packets to multicast packets of the same or different multicast model, allowing operators to control multicast trees based on their local multicast connectivity scheme, independently of the multicast scheme used by their neighbours. For example, the connectivity of two SSM multicast trees, between SSM domains, associated to the same session-flow.
   o Unicast <-> Unicast module: This module translates and replicates (if necessary) unicast packets to unicast packets, allowing operators to create unicast distribution trees with local scope and the transmission of unicast flows to a list of interested unicast-aware users in a multicasting way even when a user is connected to wireless networks.
- Shape Control mechanism: This mechanism controls the creation of distribution trees with efficient shape and avoids the reconstruction of the entire session path caused by the mobility of senders, receivers (e.g. unicast-aware receivers) or access networks as well as due to failure in the network. For instance, it avoids the existence of more than one ingress point for the same multi-user session-flow in the same multi-homed access domain.

The requests to create, delete, modify or refresh state associated with multi-user sessions can be done on-demand by an external protocol/mechanism (by using the SEACON session/application interface) or by another SEACON agent. This procedure allows SEACON to control the connectivity of multi-user sessions over heterogeneous environments, independently of the end-hosts and/or network address realms. In addition to the connectivity control operations, the state about the current session-flows aims to control the shape of inter-domain distribution trees. With this goal, a SEACON agent or an external session/application protocol or mechanism maintains per-session and per-flow state about the current multi-user sessions (including the global session identifier and the channel identifier associated to each flow in the incoming and outgoing interface tables of an agent).

The session identifier is not modified along the end-to-end path while the channel identifiers associated to session-flows (e.g. source and/or destination IP addresses, source and destination ports) may change in each domain. If the incoming session-flows have several interested agents or users in the outgoing interface table, the packets can be translated and replicated for each of them according to the local channel identifier and transport technology. As an example, we consider a unicast-aware domain, where an ingress-agent has two egress-agents associated to the same session-flows in its outgoing interface table. In this scenario, the ingress-agent uses the state associated to the session-flows to translate (e.g. replacing the source and destination addresses in the IP packet) and replicate the incoming packets (unicast or multicast packets) associated to those session-flows into two different IP unicast packets addressed to distinct egress-agents.

The interoperation between SEACON agents is done through signalling messages (by means of SEACON messages or by the use of signalling messages supported by an external protocol or mechanism). SEACON agents use the information carried by the signalling messages to request channel identifiers for each session-flow (used to distribute sessions within the domain or between domains - using the address allocation controller interface), to update the state related with session-flow and consequently to control the multi-user session connectivity and the shaping of distribution trees. For instance, during the session setup, the information about the session identifier and channel identifiers (carried in the message and stored in the agent, for instance the SSM channel associated to each session-flow inside the multicast-aware domain) are used by a SEACON agent to translate all incoming multicast packets of each session-flow to a list of interested users connected to a unicast-aware domain or another multicast-aware domain.

Moreover, SEACON in one embodiment controls the shape of distribution trees, avoids signalling and the reconstruction of the end-to-end session path caused by mobility of users (e.g. the mobility of a unicast or multicast user to a new access agent in multi-homing access network allows the existence of more than one ingress point for the same session-flows inside the domain and consequently the construction of an inefficient distribution tree) or failure in the network. An example is the situation when a multicast source of a multi-user session moves to a new access-agent inside the domain. At this time, signalling messages are used to inform the downstream egress-agent about the movement of the source. Therefore, when the egress-agent receives the message and verifies that the connectivity of the requested session-flows are already activated in the path towards the access-agent, the message is stopped and the state in the incoming interface table is updated with information about the new channel identifier in the upstream path, avoiding discontinuity points, signalling overhead and the reconstruction of the global session path.

Therefore, when a SEACON agent detects that the connectivity of the requested multi-user session-flows is already activated towards the upstream and/or downstream session path (querying the state associated to the session and flows), it tries to construct/re-construct the connectivity on the path between itself and the next upstream and/or downstream agent towards the destination, rather than end-to-end, independently of the underlying transport technology. For instance, when a unicast-aware mobile user moves to a new access-agent inside the same domain, the session connectivity is reconstructed only from the ingress-agent of the mobile user's access domain towards the new access-agent and not end-to-end. Moreover, if there is another receiver receiving the same session-flow in the new access-agent, the incoming packet will be replicated to the new mobile user and no signalling is exchanged to construct the session connectivity on the new path.

In various embodiments the SEACON mechanism comes along with a manifold of advantages, namely, it
- Controls the connectivity of multi-user sessions over unicast and multicast networks;
- Allows unicast or multicast sources to send their session content to groups of mobile users, independently of the connectivity technology used in each access network;
- Allows unicast or multicast receivers to receive the required session-flows independently of connectivity technology used in each access network;
- Allows moving terminals to make use the connectivity schemes, made available by the different access network, which is more appropriated to their capacities;
- Allows multi-user services to be offered by clients with mobile facilities without global connectivity changes;
- Uses open interfaces allowing an easy interaction with different protocols/mechanisms;
- Aims to control the shaping of inter-domain distribution trees associated to flows of sessions;
- Allows network operators to quickly deploy new multi-user services based on they own connectivity scheme, independently of the scheme used by their neighbours;
- Does not need the installation of proprietary modules on end-host.

This will become apparent from the description of further embodiments to follow below.

According to one embodiment the SEACON mechanism controls the connectivity of multi-user sessions to mobile users across heterogeneous environments, independently of the networks and/or hosts network transport technology. For instance, SEACON can be configured to control the connectivity from unicast domains to multicast domains and vice-versa as well as it can provide the linkage between multicast domains with the same or different address realms. It also allows users placed on wireless networks to receive multi-user session content based on the connectivity scheme that is more appropriated to their capacities

In addition, SEACON aims to control the shape of inter-domain distribution trees associated to session-flows and to avoid the reconstruction of the end-to-end session path due to the mobility of the hosts or network failure. This is possible because SEACON controls the multi-user session connectivity and shape between domains along the end-to-end session path. The use of global session identifier (generated by the source to identify a multi-user session) and a local channel identifier (allocated by the Address Allocation Controller mechanism to identify each session-flow inside and between domains) allows the control of transport connections domain by domain, independent from hosts location or IP addresses. Therefore, when a host moves, signalling messages are used to exchange control information between the new SEACON agent to which the host is or will be connected and the first SEACON agent to which the required session-flows are activated towards the source (e.g. due to the mobility of the receivers) or in the way towards the access-agents/receivers (e.g. due to the mobility of the source or network failure).

When an agent verifies that the connectivity of the requested session-flows is established, the signalling message is stopped and the state is updated with information about the new channel identifier associated to the session-flows (e.g. allowing the mapping of packets between different transport technologies). Moreover, upstream and/or downstream agents can be signalled to perform the connectivity control process related to the multi-user session-flows. The operations described aim to avoid the reconstruction of the entire session path, decreasing the signalling overhead and the session convergence time needed to create the session connectivity on a new path. In addition, the state related to the session-flows on the old path or when a session-flows ends can be deleted by explicitly release procedures (by using signalling messages) or by soft-state operations.

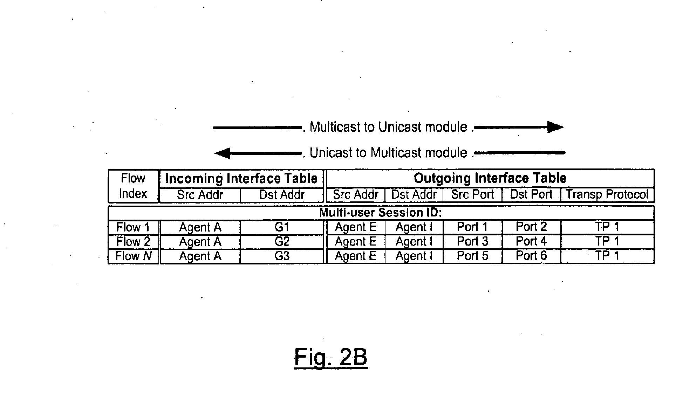

The information about which multi-user session-flows connections must be created, replicated, released, refreshed or modified can by supported by an external protocol or mechanism as well as it can be exchanged between SEACON agents by means of SEACON messages. Therefore, in order to control the connectivity between domains with the same or different address realms, a SEACON agent needs to receive information about the channel identifier associated with each session-flow in the upstream path (in a domain or between domains, for instance, global session identifier, channel identifier that can be defined by source and destination IP addresses, transport protocol number and transport source and destination port numbers). Based on this connectivity control information, the SEACON agent updates its incoming interface table and requests the allocation of a channel identifier to which each session-flow will be associated in the downstream domain or between domains. The information about the channel identifiers allocated for each session-flow is stored in the outgoing interface table. An example of the ingoing and outgoing interface tables according to one embodiment is illustrated in Fig. 2B and will be explained in more detail later. Thus, all incoming packets addressed to session-flows will be translated, may be replicated (depending on the network technology) and forwarded to a list of agents or users. If a SEACON agent is placed at an access-agent and the interested mobile receivers are connected to a wireless network, the data packets are mapped and forwarded to target ports based on the Layer 2 *Medium Access Control* (MAC) address (based on a query to the outgoing interface table). In unicast-aware domains, the packets are mapped and duplicated to a list of users based on IP addresses, ports and number of the transport protocol.

The SEACON agents can be stateful or stateless, where in the latter it is assumed that an external session or application protocol or mechanism maintains per-session and per-flow state about the current sessions in a domain or between domains to which a SEACON agent is associated. As said before, the state needed to perform the multi-user session connectivity includes information about the session identifier and channel identifier associated with each session-flow in the upstream and downstream domains (e.g. SSM channel in a multicast-aware domain). However, if more than one agent in a unicast-aware domain or inter-domain requires the same session-flow, the packets are translated and replicated to them. Moreover, in an access-agent of a unicast domain, the list of interested users contains the IP unicast addresses, the number of the transport protocol and ports of unicast users or the ports and MAC address of users connected to wireless networks. The SEACON state also allows unicast users, connected to multicast domains, to receive multi-user session content.

In order to achieve the shaping of inter-domain distribution trees associated to session-flows in multi-homed environments, the state stored by SEACON agents is enhanced with information about the domain identifier of the receiver where the session-flows were requested (it is assumed that a domain identifier is a unique identifier used to identify a set of agents that belongs to the same domain, defined by manual configuration or using some self-organized scheme) and the unicast IP address of the downstream agent associated with the session towards the domain of the receiver. Therefore, when a SEACON agent is triggered, the Shape Control mechanism is activated to verify if the requested session-flow is already present in the domain of the requester/receiver (based on a query to its state). If the session-flow is already ongoing in the domain of the receiver, the message is only forwarded to the next downstream agent towards that domain and there is no state manipulation. When the ingress-agent of the receiver's domain receives this message, the Shape Control verifies if the connectivity of the requested session-flows already exists towards the access-agent connected to the receiver or end-hosts. If the connectivity exists, the message is forwarded to the next downstream agent. However, if the request is from a new access-agent or receiver, the connectivity control mechanism is triggered and requests the allocation of a channel identifier to each session-flow towards a new access-agent or receiver. After that, the state on the outgoing interface table is updated with information about the new agent or receiver and consequently the session-flow connectivity is created. The message is stopped at the ingress-agent if the connectivity of the requested session flow is already established. With this approach, SEACON avoids the existence of more than one ingress point for the same session-flow in the same multi-homed access domain, saving network resources.

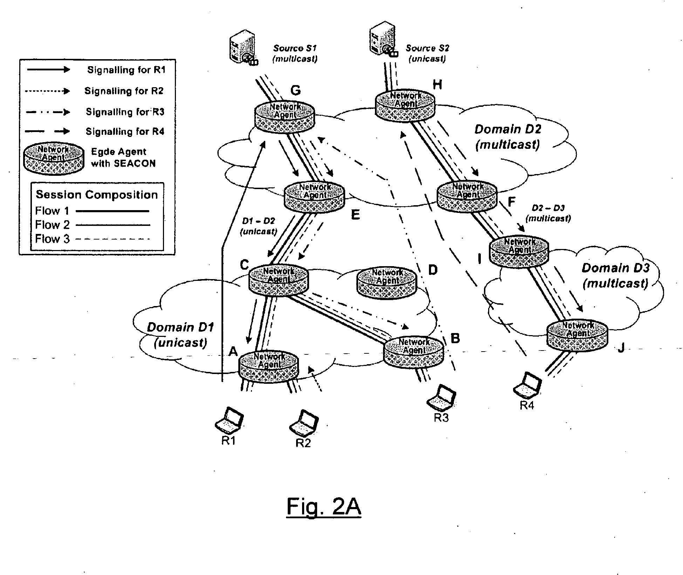

Figure 2A illustrates an example of the SEACON mechanism to control the connectivity and the shaping of multi-user sessions (composed by three flows) over heterogeneous environments. In order to simplify the explanation, this example has the following assumptions:
- The existence of an application protocol that signals SEACON along the upstream and downstream paths. This protocol is responsible for requesting the connectivity control process and to fill the session object, including the domain identifier to which the receiver is connected to. The protocol may be a dedicated protocol run by the network agents acting as SEACON agents, or it may be embedded into or be implemented by use of a standard protocol such as e.g. a new service layer protocol running on top of the GIST protocol developed by the NSIS working group of Internet Engineering Task Force (IETF). Such protocol may operate as follows: A Request message is sent by the access-agent of the receivers towards the source of the session. This message takes an IP alert function, allowing other intermediary agents to inspect it. This message is stopped by the first agent that has the session identified in the message (in the worst case the message is stopped by the agent near the source). The agent that stops the message, after activating the SEACON process, sends a Response message to the next agent in the direction of the requester access-agent. In each agent, SEACON is activated to perform its tasks. Below an example of the protocol behaviour is included in the description of Fig. 2A.
- The existence of Address Allocation Controller mechanism responsible to control the allocation of a SSM channel for each session-flow in a multicast-aware domain. In unicast-aware domains or between domains, this mechanism controls the allocation of a pair of source and destination addresses, a pair of source and destination ports and informs the next downstream agent about each session-flow. This may be implemented by the SEACON agent.
- In multicast-aware domains, an external protocol or mechanism is triggered by the application protocol to control the multicast trees associated to each session-flow;
- The sender announces the available session-flows to the users (containing the session object, which includes the session identifier and the number of each flow as well as sufficient information to allow the subscription, such as source address and ports);

Turning now to Fig. 2A, the SEACON mechanism according to one embodiment will be described. It can be seen that the SECON agents are located at the edges of the domains D1, D2, and D3, i.e. for a given session a SEACON agent acts either as an ingress agent or as an egress agent with respect to a certain domain. The SEACON agent in the ingress-agent G receives information about the published multicast session-flows of *S1* and the agent H receives information about the announced unicast session-flows of S2, allowing each SEACON agent to update its incoming interface table with information about the session identifier and channel identifier of the announced session-flows. For that purpose this information may be distributed downstream (by e.g. a "publish" message) along the further SEACON agents towards possible receivers, whereas the SEACON agents may then store the corresponding information for example in their ingoing interface table which then contains information about which sessions are available for subscription. It should be noted that there should be distinguished in the ingoing interface table about sessions which are available for subscription but which are not yet received by the SEACON agent, and such sessions which are already received by the agent, e.g. by a suitable flag indication the status of the session like "being received" or "available for subscription". Through the "publish" message the information is then forwarded downstream towards possible receivers.

Upon receiving the multi-user session announcement, the application of receiver *R1* uses a signalling message (such as e.g. 2 "subscribe" message or a "request" message) to subscribe all flows of the session *S1.* This message is sent towards the session source with the *IP Router Alert Option* [RFC 2113] enabled. When this option is enabled, it allows all SEACON agents to examine more closely the session object carried by the message, stopping its progression if they have information about the session-flows, which happens in ingress SEACON agent G because the session was previously published. Actually in the present embodiment session S1 may already be received by the agent G so that the connectivity between the source of S1 and agent G already exists. This means that there is no need to further establish this connectivity, e.g. by requesting the session S1 to be received. In another example, if the session is not yet received already by G this will be indicated in G's ingoing interface table and a corresponding request to receive the session S1 will be forwarded to the source so that the connectivity will be established.

In the ingress agent G, SEACON Shape Control verifies that the requested session is not (yet) activated in *D*1 and triggers the Connectivity Control to allow the session-flow connectivity. Then, the Connectivity Control interacts with the local Address Allocation Controller mechanism requesting the allocation of a channel identifier to which the session-flows will be associated in this multicast domain and the IP address of the egress agent (which is in this case the next downstream agent E). Based on the response, SEACON updates its outgoing interface table with information about each SSM channel, with local scope, allocated for each session-flow (the control of the intra-domain multicast trees associated to each session-flow is performed by a multicast protocol, such as PIM-SSM) and the address of the next downstream agent towards *D*1 (here agent E). After that, SEACON interacts with the requester (application protocol) informing it about the local channel identifier of each session-flow for this domain. Furthermore, in order to control the shape of inter-domain distributions trees, the SEACON agent includes the domain identifier to which the receiver is connected in the state associated to each session-flow. With this approach, the creation of different distribution trees associated with the same session-flow and addressed to the same multi-homed domain is avoided. For instance, this situation occurs when a second request requiring the connectivity control of the same session-flow arrives to an agent to which the session connectivity is already established towards the same domain (e.g. due to the existence of several ingress agents in a multi-homed domain). At last, when SEACON finishes the procedures described above, the application protocol is triggered to request the connectivity in the downstream path. The application includes the connectivity control information associated to the session-flow in the signalling message and sends it to the next downstream SEACON agent (in this case E).

Upon receiving the message, agent E updates its incoming interface table with information about the session identifier and channel identifier associated to each session-flow in domain D2, and executes the same procedures as described before. However, as unicast is the network transport technology between D2 and D1, the information related to each session-flow in the outgoing interface table is updated with information about the source (its local IP unicast address) and destination IP addresses (IP unicast address of the next downstream agent), source and destination ports (a pair of source and destination ports is allocated for each flow) and the number of the transport protocol as well as with information about the downstream agent towards *D1*. Based on this information (provided by the Address Allocation Controller mechanism), SEACON translates all packets coming from the intra-domain SSM channel to the correspondent unicast ones, with local scope, used for the session-flows between D2 and D1.
An example for the ingoing and outgoing interface tables is illustrated in Fig. 2B. This example shows how these interfaces may look like in case of a SEACON agent translating a multicast session into unicast sessions. Here there is illustrated as an example the case where an agent E receives a multicast session from agent A, translates it into unicast sessions and forwards it downstream to agent I. For a given multi-user session-ID the incoming interface table stores the session ID (not shown here) and the source address (here agent A). Moreover, there is stored a channel identifier for each flow (here Flow 1 to Flow N). Finally the destination address is stored. Each incoming multicast session flow is translated into a corresponding outgoing unicast flow and the state information is stored in the outgoing interface table as shown in Fig.. 2B For each flow there is stored the source address (here agent E), the destination address (agent I) and a pair of source and destination ports as well as an indication of the transport protocol. In this manner each flow can be identified with respect to its state. The information may further contain an indication of the domain to which the receiver is connected (not shown in Fig. 2B). Moreover, according to one embodiment there is stored an indication about any domain through which the session passes from the source towards the receiver, possibly with ingress and egress agents for each domain. This makes it possible to make use of ongoing sessions also in such cases where the requesting receiver can be reached only via multiple domains. The subscribe message may e.g. include a list of the network agents along which it has travelled upstream, and by comparing this list with the information about the domains through which an ongoing session passes, it may be possible to find the downstream path which requires the least number of links to be newly established.

The above procedures will be performed by all SEACON agents along the downstream data path until it reaches an network agent acting as an access agent, here SEACON agent A. The outgoing interface table of the agent A is then updated with information about the source and destination ports to which the application on the host wants to receive the packets (carried in the session object) as well as the unicast IP address of R1. Therefore, in agent A, all incoming packets associated to the subscribed session-flows, where the source address is the agent C and the destination address is the agent A, and with specific source and destination ports and protocol number will be forwarded to the unicast IP address of *R1.*

After the subscription of R1, the application on the receiver R2 may generate a signalling message to join the same session-flow. Since the connectivity control procedures of the requested session-flow was already activated in the access-agent A, when the SEACON agent is triggered, it only adjusts the list of receivers for the session-flows, including the unicast IP address of R2 and immediately replies a response to the requester. Therefore, SEACON maps all packets to a list of interested users, and performs the required packet duplication only at the access-agent of the domain, saving network resources and decreasing the signalling overhead and session setup time.

An example of the shaping of inter-domain distribution trees is presented when the application on the receiver R3 generates a signalling message to join the same session-flow. Since *D*1 is a multi-homed domain, in this example as shown in Fig. 2A the signalling message sent to the source requiring the session connectivity exits from domain D1 through the agent D rather than C (the connectivity of the session-flow is already established in agent C).

It is now assumed that the request is forwarded upstream through SEACON agent without passing through an agent where the requested session is already active until it reaches agent G shown in Fig. 2A. When the SEACON Shape Control mechanism in the agent ingress G is triggered, it verifies that the required session-flows are already activated towards the domain to which the receiver is connected (based on a query to its state, which contains information about the list of domains, identified by the domain identifier, associated to the required session-flows). At this time, SEACON does not execute local procedures to control the connectivity (because the connectivity exists already) and the message (the request or subscribe message) is forwarded to the next downstream agent towards the domain *D1*. The same process will be performed by SEACON agent E because in this agent also the session is already active in the downstream direction towards the domain of the receiver R2.

This can be verified because the state information stored in the agents includes the indication of the domain of the receiver. However, upon receiving the message, the agent C verifies that the session-flow connectivity is not activated towards the access agent B to which the receiver R3 is connected. After that, the shaping and connectivity control operations are performed (the packets will be translated and replicated to the new access-agent) and the SEACON agent C is signalled to control the session connectivity to the receiver R3, including the state updating (the updating of the outgoing interface table).

An example of the connectivity of multi-user sessions across multicast-aware environments, where each domain uses its local scheme to create multicast trees with local scope, is presented when the application on the receiver R4 sends a signalling message to join all flows of the session S2. When this message reaches the ingress agent H, the SEACON Connectivity Control is triggered, since the session is not activated towards D3. At this time, the Address Allocation Controller is triggered to allocate a multicast channel for each session-flows and to get acquainted of the unicast IP address of the egress agent (here agent F). Based on this information, SEACON H updates the state associated with S2 in the outgoing interface table, allowing the translation of the incoming unicast flows to the correspondent multicast trees. After that, the signalling protocol is triggered to request the session connectivity along the downstream path. When the inter-domain SEACON agent F receives the messages, it triggers the inter-domain Address Allocation Controller mechanism requesting the same connectivity and shaping information as explained before. Since a SSM is allocated to each session-flow in the inter-domain link, SEACON maps all intra-domain SSM packets in the incoming interface table to the correspondent inter-domain SSM packets, by replacing the source and destination IP address. This procedure will be performed by all agents along the downstream path. However, the access agent J, triggers an external application protocol to inform R4 about the multicast channels that must be joined for each session-flow (e.g. by using SIP). This information can then be used by the application on R4 to join the new multicast channels associated to which session-flow, for instance, by using the *Internet Group Management Protocol* (IGMPv3, RFC 3376) or *Multicast Listener Discovery* (MLDv2, RFC 3810) protocol.

One may summarise the SEACON mechanism according to one embodiment as follows. At first the available sessions are published to enable subscription. After subscription the mechanism starts to find the first agent towards the source (starting from the receiver) where the session is already activated. Then the next downstream agent is identified and if not done already, channel identifiers are requested to be allocated for the session in the domain by the address allocation interface. The outgoing interface table is updated and a response message /in response to the request or subscribe message) is forwarded downstream from this agent and is then used to configure the translators along the downstream path. This may already include the establishing of the connectivity, e.g. by triggering a suitable unicast (or multicast) protocol (like PIM-SSM) in the next downstream agent. For that purpose the response message is at first forwarded to the next agent in the downstream path, and the mechanism proceeds to this agent to either configure the translators or - if already done - to further proceed forwarding the message in downstream direction. This is done until the access agent to which the receiver is connected is reached. In other words, as long as the downstream connectivity is already established the response message (in response to the subscribe message) is just forwarded downstream. Once the connectivity further downstream does not yet exist (which can be checked by checking the state information which may be stored in the ingoing and outgoing interface tables of an agent) the channel identifiers are allocated, the translators configured and the connectivity is established. Moreover, thereafter the state information is updated (e.g. by updating the ingoing and outgoing interface tables). Preferably the state information is continuously refreshed in order to get aware of any changes, e.g. a loss in connectivity which may happen e.g. due to the movement or failure of an agent.

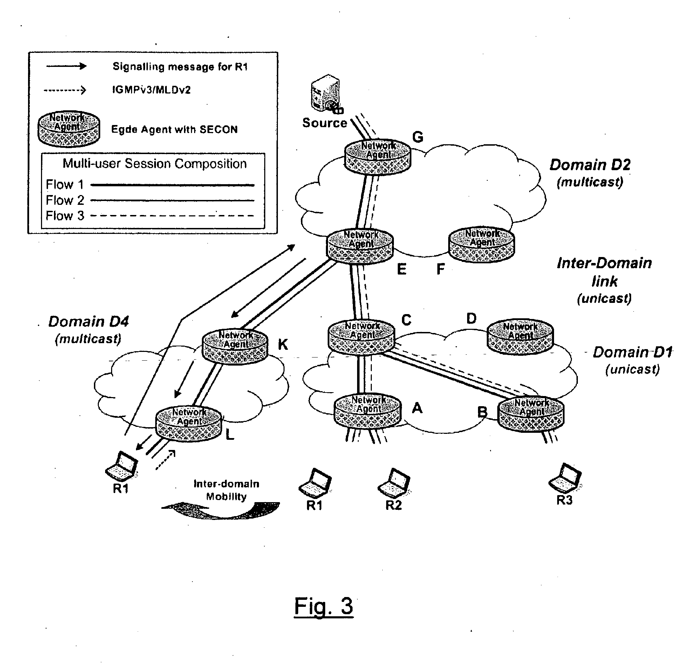

An example of the SEACON mechanism to control the connectivity and the shape of inter-domain distribution trees due to the mobility of a host is illustrated in Figure 3. This example shows that SEACON avoids the reconstruction of the entire session path caused by the mobility of a receiver, decreasing the session setup time and signalling overhead. When the receiver *R1* moves to a new access-domain, an external protocol is triggered to request the session connectivity to SEACON agents (e.g. SIP-based protocol or a Context Transfers Protocol). Therefore, when the agent E is triggered by the request forwarded upstream as the closest agent where the session is active (since it has another branch point to the same session-flows), it interacts with the Address Allocation Controller mechanism to request the allocation of a channel identifier (towards *R1)* for each session-flow to be used in the unicast inter-domain link (from E to K). Only two flows of the session are requested in this specific example, because an external QoS adaptation mechanism dropped the less priority flow of the session due to the network congestion. Based on this information SEACON agent E updates its state, allowing the mapping and the replication of the incoming packets associated to the session-flows to agent C to be forwarded also to agent K After that, the signalling protocol is triggered to signal the next agent in the downstream path towards the receiver (here agent K).

Upon receiving the message, SEACON agent K updates its incoming interface table with information about the session identifier and channel identifier associated to each session-flow in the inter-domain link and executes its local procedures to control the session connectivity. Therefore, the SEACON mechanism interacts with the Address Allocation Controller mechanism to request the allocation of a channel identifier for each session-flow inside the multicast domain D4. Based on this information SEACON agent *K* updates its state, allowing the translation of all inter-domain unicast packets to the multicast packets used for the session-flows inside D4. When it finishes its job, the signalling protocol is triggered to signal the downstream SEACON agent L and to supply it with the session object, including the local SSM allocated to each flow.

When the agent L receives the message, it updates its state (it allows the mapping and replication of packets to unicast-aware users connected to this agent) and triggers the application protocol to inform the application on the receiver *R1* about the local SSM allocated for each session-flow. This information can then be used by the application on R1 to join the new multicast channels associated to which session-flow, for instance, by IGMPv3 or MLDv2 protocol.

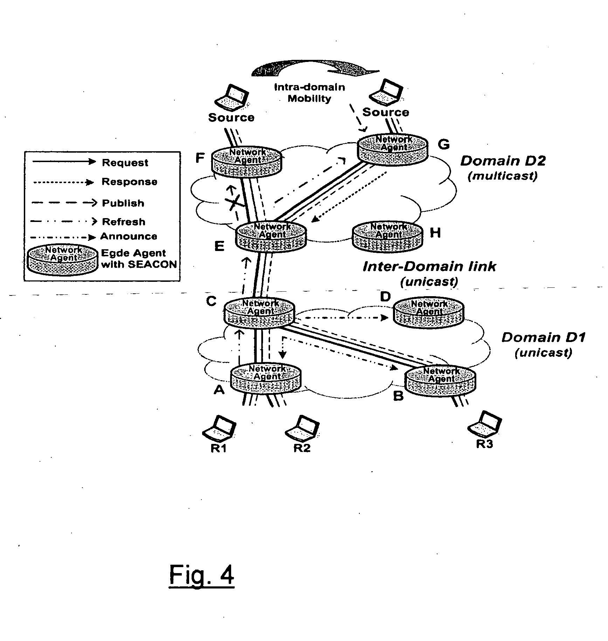

In the following there will now be explained in connection with Fig. 4 an embodiment related to a movement of the source from one network agent to another. In this example the source moves from agent F to agent G.

The newly attached source requests from agent G the activation of the ongoing session to the agent G while indicating a list which includes e.g. one or more agents which have requested the session in each domain. This list in this case includes agent A (for domain D1) and agent E (for domain D2). According to one embodiment their state is queried to check whether the session is still ongoing in these agents, although this is not essential. It may, however, be preferable to select downstream agents for which the session is still active. There is then requested a channel identifier for each session flow, a downstream agent is selected (preferably and if possible one where the session is already active), and the outgoing interface is updated accordingly. Then a message is sent downstream to towards the access agent A to request the re-establishment of the connectivity for the ongoing session flows. Agent E then verifies that the r3quested session flows are already activated in the path towards domain D1, updates its state (by updating the incoming interface table with the new SSM channels). Then the connectivity is re-established and the packet translation is performed. The state on the old path is then removed by the PIM-SSM. All access agents participating in the session are informed by announce messages about the changes in the location of one of the translators of the session (from F to G) so that they can update their state information accordingly agents

The mechanism in case of the movement of the source therefore is similar to the one in case of the movement of the receiver. Like in the latter one there is searched the closest network agent where the requested session is already running, however, the search in this case does not start at the receiver but at the source and searches for the agent closest to the source where the session is already active. For all agents on the way to the thus found agent the re-establishment of the session is requested and carried out, and for the further downstream agents (where the session is already active) there is merely provided information about the change of the translators in the upstream direction.

Similar to the movement of the receiver, if the request would exit domain D2 through agent H and enter domain D1 through agent D, nevertheless connectivity would be re-established only along the path from G to A because at first there is searched for the agent where the session is already active which is in this case then agent A. Then the connection is re-established towards the source only where necessary, which means from A to E no new connectivity is necessary, and only the path from E to G needs to be newly established. Therefore the mechanism is very robust and efficient also in case of the movement of the source.

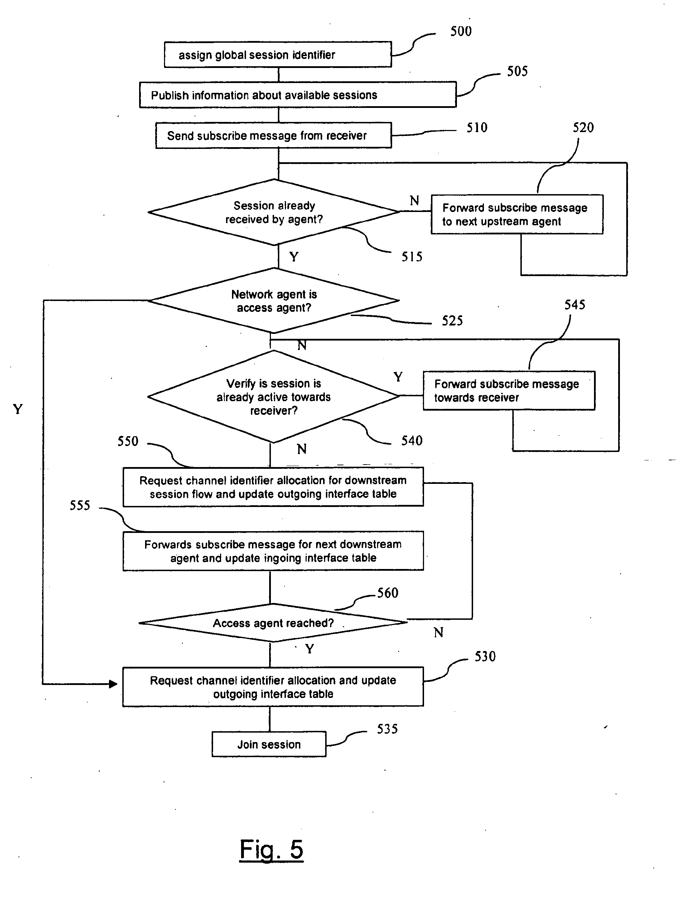

In the following an embodiment of the invention will be explained in somewhat more detail in connection with Fig. 5. Fig. 5 shows a flowchart illustrating the operation of a session control mechanism according to an embodiment of the invention.

In operation 500 a global session identifier is assigned to a session which may comprise multiple flows. In operation 505 information about the session will be published to enable the subscription to the session. This may e.g. be done by forwarding the information from the network agent receiving the session downstream through other network agents until it reaches access agents to which a receiver may subscribe a session.

In operation 510 a receiver sends such a subscribe message, typically through its access agent.

In operation 515 it is then checked whether this network agent (acting as access agent) is already receiving the session. If this is not the case, in operation 520 the subscribe message is forwarded upstream until it reaches a network agent which already receives the session so that query 515 is answered to the affirmative. In the example shown in Fig. 2A this is e.g. the case for network agent G.

It is then checked in operation 525 whether the network agent is already the access agent. If this is the case, the further procedure is relatively simple because the receiver my directly join the session. The flow proceeds to operation 530 to request a channel allocation identifier and to update the outgoing interface table, and then in operation 535 the session is joined by the receiver.

If the network agent is however not yet the access agent (like agent G in Fig. 2) it is verified if the session is already active towards the receiver in operation 540. This may e.g. be the case in the example shown in Fig. 2A where the request comes from receiver R3 through a different path, but agent G (and even agent E) have already an active session towards that receiver. This can be checked by checking the domain to which the receiver is connected (this information is forwarded together with the subscribe message) and by checking whether towards this domain a session is already active. It is readily apparent that the state information about sessions in such a case has to include information about the target domain of an active session, preferably about all downstream target domains along the session path, so that such a check can be performed.

If the check is positive, like for agent G in Fig. 2A, the subscribe message is forwarded towards the receiver, e.g. by forwarding it towards the next downstream agent. In the example of Fig. 2A this would be agent E. Again the check in operation 540 is performed which again is answered to the affirmative. And therefore the subscribe message is further forwarded downstream in operation 545 towards network agent C.

In this case it is determined in operation 540 that the session is not already active towards the receiver. This is because the ongoing session runs through a different access agent (agent A), and the subscribe request was made by a new access agent.

Therefore in operation 550 a channel identifier is then requested for the (new) downstream session flow (from agent C to agent B) and the outgoing interface table is updated. In this manner connectivity is enabled from agent C to agent B.

The subscribe message in operation 555 is then forwarded to the next downstream agent and the ingoing interface table is updated.

It is then checked in operation 560 whether an access agent has been reached. If no, the flow proceeds again to operation 550 to further prepare for the establishing of a new downstream session branch, until an access agent is reached.

If an access agent is then ultimately reached, the flow proceeds further to operation 530 to request allocation of the channel identifier and to finally join the session by the receiver through the access agent.

As can be seen from the description of the foregoing embodiments, session aware connectivity control is done ent-to-end at the edges of heterogeneous networks, more precisely, at network agents which are located at the edges of heterogeneous networks of their domains. A domain has one or more network agents located at its edges, typically at least two, and one network agent acts as an ingress agent and the other one as an outgoing agent. The agents themselves are responsible for performing the session aware connectivity control and the building of the session tree through suitable signalling along the end-to-end path. There is provided a distribution tree shaping mechanism which searches for the closest agent where the requested session is already ongoing and which establishes only the least number of necessary new links. This makes the overall system robust and efficient.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a session-aware connectivity control as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the session-aware connectivity control mechanisms as described before.

## Claims

1. A method for end-to-end session-aware connectivity control in heterogeneous networks being performed by network agents located at the edges of domains of heterogeneous networks, said method comprising:
assigning a unique global session identifier along the end-to-end path to each multi-user session;
publishing by said sender of unicast or multicast sessions information about the available sessions including the global session identifier and information about the session-flows and the source address to a network agent to which it is connected or to which it is moving to in order to enable subscription to said sessions by a receiver;
whereas further network agents are provided along the session path,
wherein said network agents comprise:
an address allocation controller interface for enabling the request of the allocation of a local channel identifier to which a multi-user session flow is associated inside or between domains;
said method being **characterized by** further comprising:
maintaining state about the multi-user sessions whereas said state includes per-session and per-flow state about the current sessions in a domain or between domains to which a network agent is associated; whereas
said network agents are distributed along said session path, and said method comprises:
receiving by an ingress network agent one or more sessions from said source and publishing information about said sessions from said source and forwarding it downstream along further network agents towards receivers;
sending from a receiver via an application protocol a subscribe message through an access agent towards said source indicating that the receiver wishes to subscribe the session and forwarding said message upstream towards said source along the network agents located in the session path;
in each network agent where said request is received, verifying by querying said state information if the requested session is already received by said network agent, and if not, forwarding said subscribe message further upstream;
if the session is found to be received by an network agent, stop forwarding upstream said subscribe message and verifying if the session is already active towards the receiver;
if said verification is positive, forwarding said subscribe message downstream towards a network agent of a domain to which said access agent belongs;
if said verification is negative, performing the following steps:
a) requesting from the address allocation controller interface the allocation of a channel identifier for the downstream session flow and updating the outgoing interface table of said network agent with said channel identifier and the address of the next network agent towards the receiver;
b) in the next network agent downstream towards the receiver, updating the incoming interface table with information about the session identifier and channel identifier, requesting the allocation of a channel identifier for the downstream session flow and updating the outgoing interface table said network agent with said channel identifier and the address of the next network agent towards the receiver;
verifying whether the access agent has been reached, and if this is not the case, repeating said steps a) and b) above until said access agent is reached,
if said access agent is reached, requesting from the address allocation controller interface the allocation of a channel identifier for the downstream session flow and updating the outgoing interface table of said network agent with said channel identifier and joining said session by said receiver through said access agent.

2. The method of claim 1, further comprising:
forwarding a subscribe message or a request message to establish a session along the network agents;
querying the state associated to the session and flows in each agent where the message is received, and
when a network agent detects from said querying that the connectivity of the requested multi-user session flows is already activated towards the upstream and/or downstream session path, trying to construct or reconstruct the connectivity in the path between itself and the next upstream and/or downstream agent towards the destination rather than end-to-end, whereas
said subscribe message is a message sent by a receiver to newly join a session and the request message is a message sent by a source which has moved to a new access agent.

3. The method of one of the preceding claims, further comprising:
if more than one network agent in an unicast aware domain or inter-domain link requires the same session flow, said method comprises:
translating the packets and replicating them to these network agents.

4. The method of one of the preceding claims, wherein
said maintained state information includes information about the domain identifier of the receiver where the session flow was requested and the address of the downstream agent associated with the session towards the domain of the receiver, and said method further comprising:
if a request for a session flow is received by a network agent, verifying based on a query of its state whether the session flow is already present in the domain of the requester;
if the connectivity exists already, forwarding the message to the next downstream agent until it reaches an ingress agent of the domain of the requester, and
if the subscribe request is from a new access agent or receiver, requesting the allocation of a channel identifier towards said new network agent or receiver and updating an outgoing interface table with information about the new network agent or receiver.

5. The method of one of the preceding claims, wherein said network agent further comprises:
a connectivity control module which supports modules for multicast to unicast, multicast to multicast and unicast to unicast translation of packets; and said method further comprising:
appropriately translating and if necessary replicating the packets by said modules in order to enable connectivity between different multicast schemes, connectivity between multicast and unicast, and connectivity between one unicast source and multiple unicast receivers.

6. The method of one of the preceding claims, wherein
if a further receiver sends a subscribe message for already active sessions through the same access agent, said access agent updates its outgoing interface table by including the port and destination IP of said further receiver and duplicates the incoming packets from said already active session to forward them to said further receiver.

7. The method of one of the preceding claims, wherein
the path of a session passes along multiple domains, and
said network agents are located at the edges of said domains.

8. The method according to one of claims 1 to 7, wherein said network agents comprise:
an interface to an session/application protocol which uses this interface to request the connectivity control of multi-user sessions by requesting one of the creation, replication, deletion, modification or refreshment of the multi-user session connectivity; and said method comprising:
requesting connectivity to be established once the channel identifier for a session has been established.

9. An apparatus for end-to-end session-aware connectivity control in heterogeneous networks to be performed by network agents located at the edges of domains of heterogeneous networks, said apparatus comprising:
a module for assigning a unique global session identifier along the end-to-end path to each multi-user session;
a module for publishing by said sender of unicast or multicast sessions information about the available sessions including the global session identifier and information about the session-flows and the source address to a network agent to which it is connected or to which it is moving to in order to enable subscription to said sessions by a receiver;
whereas further network agents are provided along the session path,
wherein said network agents comprise:
an address allocation controller interface for enabling the request of the allocation of a local channel identifier to which a multi-user session flow is associated inside or between domains;
said apparatus being **characterized by** further comprising:
a module for maintaining state about the multi-user sessions whereas said state includes per-session and per-flow state about the current sessions in a domain or between domains to which a network agent is associated; whereas
said network agents are distributed along said session path, and said apparatus comprises:
a module for receiving by an ingress network agent one or more sessions from said source and publishing information about said sessions from said source and forwarding it downstream along further network agents towards receivers;
a module for sending from a receiver via an application protocol a subscribe message through an access agent towards said source indicating that the receiver wishes to subscribe the session and forwarding said message upstream towards said source along the network agents located in the session path;
a module for in each network agent where said request is received, verifying by querying said state information if the requested session is already received by said network agent, and if not, forwarding said subscribe message further upstream;
a module for if the session is found to be received by an network agent, stop forwarding upstream said subscribe message and verifying if the session is already active towards the receiver;
a module for if said verification is positive, forwarding said subscribe message downstream towards a network agent of a domain to which said access agent belongs;
a module for if said verification is negative, performing the following steps:
a) requesting from the address allocation controller interface the allocation of a channel identifier for the downstream session flow and updating the outgoing interface table of said network agent with said channel identifier and the address of the next network agent towards the receiver;
b) in the next network agent downstream towards the receiver, updating the incoming interface table with information about the session identifier and channel identifier, requesting the allocation of a channel identifier for the downstream session flow and updating the outgoing interface table said network agent with said channel identifier and the address of the next network agent towards the receiver;
a module for verifying whether the access agent has been reached, and if this is not the case, repeating said steps a) and b) above until said access agent is reached,
a module for if said access agent is reached, requesting from the address allocation controller interface the allocation of a channel identifier for the downstream session flow and updating the outgoing interface table of said network agent with said channel identifier and joining said session by said receiver through said access agent.

10. The apparatus of claim 9, wherein said apparatus comprises:
a module for forwarding a subscribe message or a request message to establish a session along the network agents;
a module for querying the state associated to the session and flows in each agent where the message is received, and for
when a network agent detects from said querying that the connectivity of the requested multi-user session flows is already activated towards the upstream and/or downstream session path, trying to construct or reconstruct the connectivity in the path between itself and the next upstream and/or downstream agent towards the destination rather than end-to-end, whereas
said subscribe message is a message sent by a receiver to newly join a session and the request message is a message sent by a source which has moved to a new access agent.

11. The apparatus of one of claims 9 to 10, further comprising:
a module for, if more than one network agent in an unicast aware domain or inter-domain link requires the same session flow,
translating the packets and replicating them to these network agents.

12. The apparatus of one of claims 9 to 11, wherein
the state information which is maintained by said module for maintaining state includes information about the domain identifier of the receiver where the session flow was requested and the address of the downstream agent associated with the session towards the domain of the receiver, and said apparatus further comprising:
a module for, if a request for a session flow is received by a network agent, verifying based on a query of its state whether the session flow is already present in the domain of the requester;
if the connectivity exists already, forwarding the message to the next downstream agent until it reaches an ingress agent of the domain of the requester, and
if the subscribe request is from a new access agent or receiver, requesting the allocation of a channel identifier towards said new network agent or receiver and updating an outgoing interface table with information about the new network agent or receiver.

13. The apparatus of one of claims 9 to 12, wherein said network agent further comprises:
a connectivity control module which supports modules for multicast to unicast, multicast to multicast and unicast to unicast translation of packets; and said apparatus further comprising:
a module for appropriately translating and if necessary replicating the packets by said modules in order to enable connectivity between different multicast schemes, connectivity between multicast and unicast, and connectivity between one unicast source and multiple unicast receivers.

14. The apparatus of one of claims 9 to 13, wherein
said access agent is adapted to, if a further receiver sends a subscribe message for already active sessions through the same access agent, updates its outgoing interface table by including the port and destination IP of said further receiver and duplicates the incoming packets from said already active session to forward them to said further receiver.

15. The apparatus of one of claims 9 to 14, wherein
the path of a session passes along multiple domains, and
said network agents are located at the edges of said domains.

16. A computer program comprising computer program code which when being executed enables a computer to carry out a method according to one of claims 1 to 8.

## Patentansprüche

1. Verfahren für eine Ende-zu-Ende-Session-bewußte Konnektivitätssteuerung in heterogenen Netzwerken, die durch Netzwerk-Agenten durchgeführt wird, die an den Grenzen von Domains der heterogenen Netzwerke angeordnet sind, wobei das Verfahren aufweist:
Zuweisen eines eindeutigen globalen Session-Identifizierers entlang des Ende-zu-Ende-Pfads zu jeder Multi-user-session;
Veröffentlichung von Unicast- oder Multicast-Session-Informationen durch den Sender über die verfügbaren Sessions, einschließlich der globalen Session-Identifizierer und Informationen über die Session-Flüsse und
Quelladresse zu einem Netzwerk-Agenten, mit dem er verbunden ist oder zu dem er sich bewegt, um die Subskription zu den Sessions durch einen Empfänger zu ermöglichen;
wobei weitere Netzwerk-Agenten entlang des Sessionpfads vorgesehen sind,
wobei die Netzwerk-Agenten aufweisen:
ein Adresszuweisungs-Steuerinterface, um die Anforderung der Zuweisung eines lokalen Kanalidentifizierers, mit dem ein Multi-User-Session-Fluss innerhalb oder zwischen Domains assoziert ist, zu ermöglichen;
wobei das Verfahren ferner **gekennzeichnet ist, dadurch** dass es aufweist:
Führen des Status über die Multi-User-Session, wobei der Status Pro-Session und Pro-Fluss-Status über die momentanen Sessions in einer Domain oder zwischen Domains, denen ein Netzwerkagent zugeordnet einschließt, wobei
die Netzwerk-Agenten entlang des Session-Pfads verteilt sind und das Verfahren aufweist:
Empfangen von einer oder mehreren Sessions **durch** einen Eingangs-Netzwerk-Agenten von der Quelle und Veröffentlichen von Informationen über die Sessions von der Quelle sowie Weiterleiten von ihnen downstream entlang weiterer Netzwerk-Agenten in Richtung von Empfängern;
Senden einer Subskriptionsnachricht von einem Empfänger über ein Anwendungsprotokoll **durch** eine Zugriffsagenten in Richtung der Quelle, welche angibt, dass der Empfänger die Session subskribieren möchte, sowie Weiterleiten der Nachricht upstream in Richtung der Quelle entlang der Netzwerk-Agenten, die in dem Sessionpfad angeordnet sind;
in jedem Netzwerk-Agenten, in dem die Anforderung empfangen wird, verifizieren **durch** Abfragen der Statusinformation, ob die angeforderte Session bereits von dem Netzwerkagenten empfangen wird, und falls nicht, Weiterleiten der Subskriptionsnachricht weiter usptream;
falls festgestellt wird, dass die Session von einem Netzwerk-Agenten emfpangen wird, Stoppen des Weiterleitens upstream der Subskriptionsnachricht und Verifizieren, ob die Session bereits aktiv in Richtung des Empfängers ist;
falls die Verifikation positiv ist, Weiterleiten der Subskriptionsnachricht downstream in Richtung eines Netzwerk-Agenten einer Domain, zu der der Zugriffs-Agent gehört;
falls die Verifikation negativ ist, Durchführen der folgenden Schritte:
a) Anfordern der Zuweisung eines Kanalidentifizierers für den Downstream-Sessionfluss von dem Adresszuweisungs-Steuerinterface und Updaten der ausgehenden Interface-Tabelle des Netzwerk-Agenten mit dem Kanalidentifizierer und der Adresse des nächsten Netzwerk-Agenten in Richtung des Empfängers;
b) in dem nächsten Netzwerk-Agenten downstream in Richtung des Empfängers, updaten der eingehenden Interface-Tabelle mit Informationen über den Session-Identifizierer und Kanalidentifizierer, Anfordern der Zuweisung eines Kanalidentifizierers für den Downstream-Session-Fluss und
Updaten der ausgehenden Interface-Tabelle des Netzwerk-Agenten mit dem Kanalidentifizierer und der Adresse des nächsten Netzwerkagenten in Richtung des Empfängers;
Verifizieren, ob der Zugriffs-Agent erreicht wurde, und falls dies nicht der Fall ist, wiederholen von Schritten a) und b) bis der Zugriffsagent erreicht wurde, falls der Zugriffsagent erreicht wurde, Anfordern der Zuweisung eines Kanalidentifizierers für den Downstream-Session-Fluss von dem Adresszuweisungs-Steuerinterface und Updaten der ausgehenden Interface-Tabelle des Netzwerk-Agenten mit dem Kanalidentifizierer und Teilnahme an der Session **durch** den Empfänger über den Zugriffs-Agenten.

2. Verfahren nach Anspruch 1, ferner aufweisend:
Weiterleiten einer Subskriptionsnachricht oder einer Anforderungsnachricht, um eine Session entlang der Netzwerk-Agenten zu etablieren;
Abfragen des Status, der der Session und den Flüssen zugeordnet ist, in jedem Agenten, in dem die Nachricht empfangen wird, und
wenn ein Netzwerk-Agent durch die Abfrage feststellt, dass die Konnektivität der angeforderten Multi-User-Session-Flüsse bereits in Richtung des Upstream- und/oder des Downstream-Session-Pfads aktiviert ist, versuchen des Konstruierens oder Rekonstruierens der Konnektivität in dem Pfad zwischen ihm selbst und dem nächsten Upstream- und/oder Downstream-Agenten in Richtung des Ziels anstelle von Ende-zu-Ende, wobei
die Subskriptionsnachricht eine Nachricht ist, die durch einen Empfänger gesendet wird, um sich neu einer Session anzuschließen und die Anforderungsnachricht eine Nachricht ist, die von einer Quelle gesendet wird, die sich zu einem neuen Zugriffsagenten bewegt hat.

3. Verfahren nach einem der vorhergehenden Ansprüche, ferner aufweisend:
falls mehr als ein Netzwerk-Agent in einer unicast-bewußten Domain oder Inter-Domain-Verbindung den selben Session-Fluss anfordert, das Verfahren aufweist:
Übersetzen der Pakete und Replizieren von ihnen zu diesen Netzwerkagenten.

4. Verfahren nach einem der vorhergehenden Ansprüche, wobei
die geführte Statusinformation Informationen einschließt über den Domainidentifizierer des Empfängers, bei dem der Sessionfluss angefordert wurde und die Adresse des Downstream-Agenten, der mit der Session in Richtung der Domain des Empfängers assoziiert ist, und wobei das Verfahren ferner aufweist:
falls eine Anforderung für einen Session-Fluss durch einen Netzwerk-Agenten empfangen wird, verifizieren basierend auf einer Abfrage seines Status, ob der Session-Fluss bereits in der Domain des Anforderers vorhanden ist;
falls die Konnektivität bereits existiert, Weiterleiten der Nachricht zu dem nächsten Downstream-Agenten bis er einen Eingangs-Agenten der Domain des Anforderers erreicht und
falls die Subskriptionsanforderung von einem neuen Zugriffsagenten oder Empfänger stammt, Anfordern der Zuweisung eines Kanalidentifizierers in Richtung des neuen Netzwerk-Agenten oder Empfängers und Updaten einer ausgehenden Interface-Tabelle mit Informationen über den neuen Netzwerk-Agenten oder Empfänger.

5. Verfahren nach einem der vorhergehenden Ansprüche, wobei der Netzwerk-Agent ferner aufweist:
ein Konnektivitäts-Steuermodul, welches Module für Multicast-zu-Unicast, Multicast-zu-Multicast und Unicast-zu-Unicast-Übersetzung von Paketen unterstützt;
wobei das Verfahren ferner aufweist:
geeignetes Übersetzen und falls notwendig Replizieren der Pakete durch die Module, um Konnektivität zwischen unterschiedlichen Multicast-Schemata zu ermöglichen, Konnektivität zwischen Multicast und Unicast zu ermöglichen und Konnektivität zwischen einer Unicast-Quelle und mehreren Unicast-Empfängern zu ermöglichen.

6. Verfahren nach einem der vorhergehenden Ansprüche, wobei
falls ein weiterer Empfänger eine Subsriptionsnachricht für bereits aktive Sessions durch denselben Zugriffsagenten schickt, der Zugriffsagent seine ausgehende Interface-Tabelle updated, indem er Port- und Destinations-IP des weiteren Empfängers einschließt und die eingehenden Pakete von der bereits aktiven Session dupliziert, um sie zu dem weiteren Empfänger weiterzuleiten.

7. Verfahren nach einem der vorhergehenden Ansprüche, wobei der Pfad einer Session entlang mehrerer Domains läuft und
die Netzwerk-Agenten an den Grenzen der Domains angeordnet sind.

8. Verfahren nach einem der Ansprüche 1 bis 7, wobei die Netzwerk-Agenten aufweisen:
Ein Interface zu einem Session/Anwendungs-Protokoll, das dieses Interface verwendet, um die Konnektivitätssteuerung von Multi-User-Sessions anzufordern, indem eines von Erzeugung, Replikation, Löschung, Modifikation oder Erneuerung der Multi-User-Session-Konnektivität angefordert wird; und
wobei das Verfahren aufweist:
Anfordern des Etablierens von Konnektivität, sobald der Kanalidentifizierer für eine Session etabliert wurde.

9. Vorrichtung für eine Ende-zu-Ende-Session-bewußte Konnektivitätssteuerung in heterogenen Netzwerken, die durch Netzwerk-Agenten durchgeführt wird, die an den Grenzen von Domains der heterogenen Netzwerke angeordnet sind, wobei die Vorrichtung aufweist:
Ein Modul zum Zuweisen eines eindeutigen globalen Session-Identifizierers entlang des Ende-zu-Ende-Pfads zu jeder Multi-user-session;
Ein Modul zum Veröffentlichung von Unicast- oder Multicast-Session-Informationen durch den Sender über die verfügbaren Sessions, einschließlich der globalen Session-Identifizierer und Informationen über die Session-Flüsse und Quelladresse zu einem Netzwerk-Agenten, mit dem er verbunden ist oder zu dem er sich bewegt, um die Subskription zu den Sessions durch einen Empfänger zu ermöglichen;
wobei weitere Netzwerk-Agenten entlang des Sessionpfads vorgesehen sind,
wobei die Netzwerk-Agenten aufweisen:
ein Adresszuweisungs-Steuerinterface, um die Anforderung der Zuweisung eines lokalen Kanalidentifizierers, mit dem ein Multi-User-Session-Fluss innerhalb oder zwischen Domains assoziert ist, zu ermöglichen;
wobei die Vorrichtung ferner **gekennzeichnet ist, dadurch** dass sie aufweist:
Ein Modul zum Führen des Status über die Multi-User-Session, wobei der Status Pro-Session und Pro-Fluss-Status über die momentanen Sessions in einer Domain oder zwischen Domains, denen ein Netzwerkagent zugeordnet einschließt, wobei
die Netzwerk-Agenten entlang des Session-Pfads verteilt sind und die Vorrichtung aufweist:
Ein Modul zum Empfangen von einer oder mehreren Sessions **durch** einen Eingangs-Netzwerk-Agenten von der Quelle und Veröffentlichen von Informationen über die Sessions von der Quelle sowie Weiterleiten von ihnen downstream entlang weiterer Netzwerk-Agenten in Richtung von Empfängern;
ein Modul zum Senden einer Subskriptionsnachricht von einem Empfänger über ein Anwendungsprotokoll **durch** eine Zugriffsagenten in Richtung der Quelle, welche angibt, dass der Empfänger die Session subskribieren möchte, sowie Weiterleiten der Nachricht upstream in Richtung der Quelle entlang der Netzwerk-Agenten, die in dem Sessionpfad angeordnet sind;
ein Modul zum, in jedem Netzwerk-Agenten, in dem die Anforderung empfangen wird, verifizieren **durch** Abfragen der Statusinformation, ob die angeforderte Session bereits von dem Netzwerkagenten empfangen wird, und falls nicht, Weiterleiten der Subskriptionsnachricht weiter usptream;
ein Modul zum, falls festgestellt wird, dass die Session von einem Netzwerk-Agenten emfpangen wird, Stoppen des Weiterleitens upstream der Subskriptionsnachricht und Verifizieren, ob die Session bereits aktiv in Richtung des Empfängers ist;
ein Modul zum, falls die Verifikation positiv ist, Weiterleiten der Subskriptionsnachricht downstream in Richtung eines Netzwerk-Agenten einer Domain, zu der der Zugriffs-Agent gehört;
ein Modul zum, falls die Verifikation negativ ist, Durchführen der folgenden Schritte:
a) Anfordern der Zuweisung eines Kanalidentifizierers für den Downstream-Sessionfluss von dem Adresszuweisungs-Steuerinterface und Updaten der ausgehenden Interface-Tabelle des Netzwerk-Agenten mit dem Kanalidentifizierer und der Adresse des nächsten Netzwerk-Agenten in Richtung des Empfängers;
b) in dem nächsten Netzwerk-Agenten downstream in Richtung des Empfängers, updaten der eingehenden Interface-Tabelle mit Informationen über den Session-Identifizierer und Kanalidentifizierer, Anfordern der Zuweisung eines Kanalidentifizierers für den Downstream-Session-Fluss und
Updaten der ausgehenden Interface-Tabelle des Netzwerk-Agenten mit dem Kanalidentifizierer und der Adresse des nächsten Netzwerkagenten in Richtung des Empfängers;
ein Modul zum Verifizieren, ob der Zugriffs-Agent erreicht wurde, und falls dies nicht der Fall ist, wiederholen von Schritten a) und b) bis der Zugriffsagent erreicht wurde,
ein Modul zum, falls der Zugriffsagent erreicht wurde, Anfordern der Zuweisung eines Kanalidentifizierers für den Downstream-Session-Fluss von dem Adresszuweisungs-Steuerinterface und Updaten der ausgehenden Interface-Tabelle des Netzwerk-Agenten mit dem Kanalidentifizierer und
Teilnahme an der Session **durch** den Empfänger über den Zugriffs-Agenten.

10. Vorrichtung nach Anspruch 9, wobei die Vorrichtung aufweist:
ein Modul zum Weiterleiten einer Subskriptionsnachricht oder einer Anforderungsnachricht, um eine Session entlang der Netzwerk-Agenten zu etablieren;
ein Modul zum Abfragen des Status der Session und den Flüssen zugeordnet ist, in jedem Agenten, in dem die Nachricht empfangen wird, und
ein Modul zum, wenn ein Netzwerk-Agent durch die Abfrage feststellt, dass die Konnektivität der angeforderten Multi-User-Session-Flüsse bereits in Richtung des Upstream- und/oder des Downstream-Session-Pfads aktiviert ist, versuchen des Konstruierens oder Rekonstruierens der Konnektivität in dem Pfad zwischen ihm selbst und dem nächsten Upstream- und/oder Downstream-Agenten in Richtung der Destination anstelle von Ende-zu-Ende, wobei
die Subskriptionsnachricht eine Nachricht ist, die durch einen Empfänger gesendet wird, um sich neu einer Session anzuschließen und die Anforderungsnachricht eine Nachricht ist, die von einer Quelle gesendet wird, die sich zu einem neuen Zugriffsagenten bewegt hat.

11. Vorrichtung nach einem der Ansprüche 9 bis 10, ferner aufweisend:
ein Modul zum, falls mehr als ein Netzwerk-Agent in einer unicast-bewußten Domain oder inter-domain-Verbindung denselben Session-Fluss anfordert, Übersetzen der Pakete und Replizieren von ihnen zu diesen Netzwerkagenten.

12. Vorrichtung nach einem der Ansprüche 9 bis 11, wobei die geführten Statusinformation, die von dem Modul zum Führen von Statusinformationen geführt wird, Informationen einschließt über den Domainidentifizierer des Empfängers, bei dem der Sessionfluss angefordert wurde und die Adresse des Downstream-Agenten, der mit der Session in Richtung der Domain des Empfängers assoziiert ist, und wobei die Vorrichtung ferner aufweist:
ein Modul zum, falls eine Anforderung für einen Session-Fluss durch einen Netzwerk-Agenten empfangen wird, verifizieren basierend auf einer Abfrage seines Status, ob der Session-Fluss bereits in der Domain des Anforderers vorhanden ist;
falls die Konnektivität bereits existiert, Weiterleiten der Nachricht zu dem nächsten Downstream-Agenten bis er einen Eingangs-Agenten der Domain des Anforderers erreicht und
falls die Subskriptionsanforderung von einem neuen Zugriffsagenten oder Empfänger stammt, Anfordern der Zuweisung eines Kanalidentifizierers in Richtung des neuen Netzwerk-Agenten oder Empfängers und Updaten einer ausgehenden Interface-Tabelle mit Informationen über den neuen Netzwerk-Agenten oder Empfänger.

13. Vorrichtung nach einem der Ansprüche 9 bis 12, wobei der Netzwerk-Agent ferner aufweist:
ein Konnektivitäts-Steuermodul, welches Module für Multicast-zu-Unicast, Multicast-zu-Multicast und Unicast-zu-Unicast-Übersetzung von Paketen unterstützt;
wobei die Vorrichtung ferner aufweist:
ein Modul zum geeigneten Übersetzen und falls notwendig Replizieren der Pakete durch die Module, um Konnektivität zwischen unterschiedlichen Multicast-Schemata zu ermöglichen, Konnektivität zwischen Multicast und Unicast zu ermöglichen und Konnektivität zwischen einer Unicast-Quelle und
mehreren Unicast-Empfängern zu ermöglichen.

14. Vorrichtung nach einem der Ansprüche 9 bis 13, wobei
der Zugriffsagent angepasst ist, um, falls ein weiterer Empfänger eine Subsriptionsnachricht für bereits aktive Sessions durch denselben Zugriffsagenten schickt, der Zugriffsagent seine ausgehende Interface-Tabelle updated, indem er Port- und Destinations-IP des weiteren Empfängers einschließt und die eingehenden Pakete von der bereits aktiven Session dupliziert, um sie zu dem weiteren Empfänger weiterzuleiten.

15. Vorrichtung nach einem der Ansprüche 9 bis 14, wobei der Pfad einer Session entlang mehrerer Domains läuft und
die Netzwerk-Agenten an den Grenzen der Domains angeordnet sind.

16. Computerprogramm aufweisend Computerprogrammcode, der, wenn er ausgeführt wird, einen Computer in die Lage versetzt, ein Verfahren gemäß einem der Ansprüche 1 bis 8 auszuführen.

## Revendications

1. Procédé pour un contrôle de connectivité sensible à la session de bout à bout dans des réseaux hétérogènes, effectué par des agents de réseau situés aux bords de domaines de réseaux hétérogènes, ledit procédé comprenant les étapes consistant à :
attribuer un identifiant de session global unique le long du chemin de bout à bout à chaque session multi-utilisateur ;
publier par ledit émetteur des informations de sessions de monodiffusion ou de multidiffusion au sujet des sessions disponibles, comprenant l'identifiant de session global, et des informations au sujet des flux de session et de l'adresse source à destination d'un agent de réseau auquel il est connecté ou vers lequel il se déplace afin de permettre un abonnement auxdites sessions par un récepteur ;
alors que d'autres agents de réseau sont prévus le long du chemin de session, dans lequel lesdits agents de réseau comprennent :
une interface de contrôle d'allocation d'adresse pour permettre la demande de l'allocation d'un identifiant de canal local auquel un flux de session multi-utilisateur est associé à l'intérieur ou entre des domaines ;
ledit procédé étant **caractérisé en ce qu'**il comprend en outre les étapes consistant à :
entretenir un état concernant les sessions multi-utilisateur, dans lequel ledit état comprend un état par session et un état par flux concernant les sessions actuelles dans un domaine ou entre des domaines auxquels un agent de réseau est associé ;
lesdits agents de réseau sont répartis le long dudit chemin de session, et ledit procédé comprend les étapes consistant à :
recevoir par un agent de réseau d'entrée une ou plusieurs sessions provenant de ladite source et publier des informations au sujet desdites sessions provenant de ladite source et les retransmettre en aval en passant par d'autres agents de réseau en direction de récepteurs ;
envoyer à partir d'un récepteur par l'intermédiaire d'un protocole d'application un message d'abonnement à travers un agent d'accès en direction de ladite source indiquant que le récepteur souhaite s'abonner à la session et retransmettre ledit message en amont en direction de ladite source en passant par les agents de réseau situés sur le chemin de session ;
au niveau de chaque agent de réseau où ladite demande est reçue, vérifier par une requête desdites informations d'état, si la session demandée a déjà été reçue par ledit agent de réseau, et si ce n'est pas le cas, retransmettre ledit message d'abonnement plus loin en amont ;
si la session a été reçue par un agent de réseau, arrêter la retransmission en amont dudit message d'abonnement et vérifier si la session est déjà active en direction du récepteur ;
si ladite vérification est positive, retransmettre ledit message d'abonnement en aval en direction d'un agent de réseau d'un domaine auquel appartient ledit agent d'accès ;
si ladite vérification est négative, effectuer les étapes suivantes :
a) demander à l'interface de contrôle d'allocation d'adresse l'allocation d'un identifiant de canal pour le flux de session aval et mettre à jour la table d'interface sortante dudit agent de réseau avec ledit identifiant de canal et l'adresse de l'agent de réseau suivant en direction du récepteur ;
b) au niveau de l'agent de réseau suivant en aval en direction du récepteur, mettre à jour la table d'interface entrante avec des informations au sujet de l'identifiant de session et de l'identifiant de canal, demander l'allocation d'un identifiant de canal pour le flux de session aval et mettre à jour la table d'interface sortante dudit agent de réseau avec ledit identifiant de canal et l'adresse de l'agent de réseau suivant en direction du récepteur ;
vérifier si l'agent d'accès a été atteint, et si ce n'est pas le cas, répéter lesdites étapes a) et b) ci-dessus jusqu'à ce que ledit agent d'accès ait été atteint ;
si ledit agent d'accès a été atteint, demander à l'interface de contrôle d'allocation d'adresse l'allocation d'un identifiant de canal pour le flux de session aval et mettre à jour la table d'interface sortante dudit agent de réseau avec ledit identifiant de canal et rejoindre ladite session par ledit récepteur à travers ledit agent d'accès.

2. Procédé selon la revendication 1, comprenant en outre les étapes consistant à :
retransmettre un message d'abonnement ou un message de demande pour établir une session en passant par les agents de réseau ;
formuler une requête de l'état associé à la session et aux flux au niveau de chaque agent où le message est reçu ; et
quand un agent de réseau détecte à partir de ladite requête que la connectivité des flux de session multi-utilisateur demandée est déjà activée en direction du chemin de session amont et/ou aval, essayer d'établir ou de rétablir la connectivité sur le chemin entre l'agent lui-même et l'agent amont et/ou aval suivant en direction de la destination au lieu de bout à bout ;
ledit message d'abonnement est un message envoyé par un récepteur pour rejoindre nouvellement une session et le message de demande est un message envoyé par une source qui s'est déplacée vers un nouvel agent d'accès.

3. Procédé selon l'une quelconque des revendications précédentes, comprenant en outre :
si plus d'un agent de réseau dans un domaine sensible à une monodiffusion ou une liaison entre domaines nécessite le même flux de session, l'étape consistant à :
traduire les paquets et les dupliquer à destination de ces agents de réseau.

4. Procédé selon l'une quelconque des revendications précédentes, dans lequel
lesdites informations d'état entretenues comprennent des informations au sujet de l'identifiant de domaine du récepteur où le flux de session a été demandé et de l'adresse de l'agent aval associé à la session en direction du domaine du récepteur, et ledit procédé comprenant en outre les étapes consistant à :
si une demande pour un flux de session est reçue par un agent de réseau, vérifier sur la base d'une requête de son état si le flux de session est déjà présent dans le domaine du demandeur ;
si la connectivité existe déjà, retransmettre le message à l'agent aval suivant jusqu'à ce qu'il atteigne un agent d'entrée du domaine du demandeur ; et
si la demande d'abonnement provient d'un nouvel agent d'accès ou récepteur, demander l'allocation d'un identifiant de canal en direction dudit nouvel agent de réseau ou récepteur et mettre à jour une table d'interface sortante avec des informations au sujet du nouvel agent de réseau ou récepteur.

5. Procédé selon l'une quelconque des revendications précédentes, dans lequel ledit agent de réseau comprend en outre:
un module de commande de connectivité qui prend en charge des modules de traduction de paquets pour multidiffusion à monodiffusion, multidiffusion à multidiffusion et monodiffusion à monodiffusion ; et ledit procédé comprenant en outre l'étape consistant à :
traduire de façon appropriée et si nécessaire dupliquer les paquets par lesdits modules afin de permettre une connectivité entre différentes méthodes de multidiffusion, une connectivité entre multidiffusion et monodiffusion, et une connectivité entre une seule source de monodiffusion et plusieurs récepteurs de monodiffusion.

6. Procédé selon l'une quelconque des revendications précédentes, dans lequel,
si un récepteur supplémentaire envoie un message d'abonnement pour des sessions déjà actives à travers le même agent d'accès, ledit agent d'accès met à jour sa table d'interface sortante en incluant le port et l'IP de destination dudit récepteur supplémentaire et duplique les paquets entrants provenant de ladite session déjà active pour les retransmettre audit récepteur supplémentaire.

7. Procédé selon l'une quelconque des revendications précédentes, dans lequel
le chemin d'une session passe par des domaines multiples ; et
lesdits agents de réseau sont situés aux bords desdits domaines.

8. Procédé selon l'une quelconque des revendications 1 à 7, dans lequel lesdits agents de réseau comprennent :
une interface avec un protocole de session/application qui utilise cette interface pour demander la commande de connectivité de sessions multi-utilisateur en demandant un élément parmi la création, la duplication, la suppression, la modification ou le rafraîchissement de la connectivité de session multi-utilisateur ; et ledit procédé comprenant l'étape consistant à :
demander l'établissement de la connectivité une fois que l'identifiant de canal pour une session a été établi.

9. Appareil pour une commande de connectivité sensible à la session de bout à bout dans des réseaux hétérogènes, à effectuer par des agents de réseau situés aux bords de domaines de réseaux hétérogènes, ledit appareil comprenant :
un module pour attribuer un identifiant de session global unique le long du chemin de bout à bout jusqu'à chaque session multi-utilisateur ;
un module pour publier par ledit émetteur des informations de sessions de monodiffusion ou de multidiffusion au sujet des sessions disponibles, comprenant l'identifiant de session global, et des informations au sujet des flux de session et de l'adresse source à destination d'un agent de réseau auquel il est connecté ou vers lequel il se déplace afin de permettre un abonnement auxdites sessions par un récepteur ;
alors que d'autres agents de réseau sont prévus le long du chemin de session, dans lequel lesdits agents de réseau comprennent :
une interface de contrôleur d'allocation d'adresse pour permettre la demande de l'allocation d'un identifiant de canal local auquel un flux de session multi-utilisateur est associé à l'intérieur ou entre des domaines ;
ledit appareil étant **caractérisé en ce qu'**il comprend en outre :
un module pour entretenir un état concernant les sessions multi-utilisateur, dans lequel ledit état comprend un état par session et un état par flux concernant les sessions actuelles dans un domaine ou entre des domaines auxquels un agent de réseau est associé ;
lesdits agents de réseau sont répartis le long dudit chemin de session, et ledit appareil comprend ;
un module pour recevoir par un agent de réseau d'entrée une ou plusieurs sessions provenant de ladite source et pour publier des informations au sujet desdites sessions provenant de ladite source et les retransmettre en aval en passant par d'autres agents de réseau en direction de récepteurs ;
un module pour envoyer à partir d'un récepteur par l'intermédiaire d'un protocole d'application un message d'abonnement à travers un agent d'accès en direction de ladite source indiquant que le récepteur souhaite s'abonner à la session et retransmettre ledit message en amont en direction de ladite source en passant par les agents de réseau situés sur le chemin de session ;
un module pour, au niveau de chaque agent de réseau où ladite demande est reçue, vérifier par une requête desdites informations d'état, si la session demandée a déjà été reçue par ledit agent de réseau, et si ce n'est pas le cas, retransmettre ledit message d'abonnement plus loin en amont ;
un module pour, s'il s'avère que la session a été reçue par un agent de réseau, arrêter la retransmission en amont dudit message d'abonnement et pour vérifier si la session est déjà active en direction du récepteur ;
un module pour, si ladite vérification est positive, retransmettre ledit message d'abonnement en aval en direction d'un agent de réseau d'un domaine auquel appartient ledit agent d'accès ;
un module pour, si ladite vérification est négative, effectuer les étapes suivantes :
a) demander à l'interface de contrôleur d'allocation d'adresse l'allocation d'un identifiant de canal pour le flux de session aval et mettre à jour la table d'interface sortante dudit agent de réseau avec ledit identifiant de canal et l'adresse de l'agent de réseau suivant en direction du récepteur ;
b) au niveau de l'agent de réseau suivant en aval en direction du récepteur, mettre à jour la table d'interface entrante avec des informations au sujet de l'identifiant de session et de l'identifiant de canal, demander l'allocation d'un identifiant de canal pour le flux de session aval et mettre à jour la table d'interface sortante dudit agent de réseau avec ledit identifiant de canal et l'adresse de l'agent de réseau suivant en direction du récepteur ;
un module pour vérifier si l'agent d'accès a été atteint, et si ce n'est pas le cas, répéter lesdites étapes a) et b) ci-dessus jusqu'à ce que ledit agent d'accès ait été atteint ;
un module pour, si ledit agent d'accès a été atteint, demander à l'interface de contrôleur d'allocation d'adresse l'allocation d'un identifiant de canal pour le flux de session aval et mettre à jour la table d'interface sortante dudit agent de réseau avec ledit identifiant de canal et rejoindre ladite session par ledit récepteur à travers ledit agent d'accès.

10. Appareil selon la revendication 9, dans lequel ledit appareil comprend :
un module pour retransmettre un message d'abonnement ou un message de demande pour établir une session en passant par les agents de réseau ;
un module pour formuler une requête de l'état associé à la session et aux flux au niveau de chaque agent où le message est reçu ; et
quand un agent de réseau détecte d'après ladite requête que la connectivité des flux de session multi-utilisateur demandée est déjà activée en direction du chemin de session amont et/ou aval, essayer d'établir ou de rétablir la connectivité sur le chemin entre l'agent lui-même et l'agent amont et/ou aval suivant en direction de la destination au lieu de bout à bout ;
alors que ledit message d'abonnement est un message envoyé par un récepteur pour rejoindre nouvellement une session et le message de demande est un message envoyé par une source qui s'est déplacée vers un nouvel agent d'accès.

11. Appareil selon l'une quelconque des revendications 9 à 10, comprenant en outre :
un module pour, si plus d'un agent de réseau dans un domaine sensible à une monodiffusion ou une liaison entre domaines nécessite le même flux de session,
traduire les paquets et les dupliquer à destination de ces agents de réseau.

12. Appareil selon l'une quelconque des revendications 9 à 11, dans lequel
les informations d'état qui sont entretenues par ledit module pour entretenir l'état comprennent des informations au sujet de l'identifiant de domaine du récepteur où le flux de session a été demandé et de l'adresse de l'agent aval associé à la session en direction du domaine du récepteur, et ledit appareil comprenant en outre :
un module pour, si une demande pour un flux de session est reçue par un agent de réseau, vérifier sur la base d'une requête de son état si le flux de session est déjà présent dans le domaine du demandeur ;
si la connectivité existe déjà, retransmettre le message à l'agent aval suivant jusqu'à ce qu'il atteigne un agent d'entrée du domaine du demandeur ; et
si la demande d'abonnement provient d'un nouvel agent d'accès ou récepteur, demander l'allocation d'un identifiant de canal en direction dudit nouvel agent de réseau ou récepteur et mettre à jour une table d'interface sortante avec des informations au sujet du nouvel agent de réseau ou récepteur.

13. Appareil selon l'une quelconque des revendications 9 à 12, dans lequel ledit agent de réseau comprend en outre :
un module de commande de connectivité qui prend en charge des modules de traduction de paquets pour multidiffusion à monodiffusion, multidiffusion à multidiffusion et monodiffusion à monodiffusion ; et ledit appareil comprenant en outre :
un module pour traduire de façon appropriée, et si nécessaire dupliquer les paquets par lesdits modules, afin de permettre une connectivité entre différentes méthodes de multidiffusion, une connectivité entre multidiffusion et monodiffusion, et une connectivité entre une seule source de monodiffusion et plusieurs récepteurs de monodiffusion.

14. Appareil selon l'une quelconque des revendications 9 à 13, dans lequel,
ledit agent d'accès est adapté pour, si un récepteur supplémentaire envoie un message d'abonnement pour des sessions déjà actives à travers le même agent d'accès, mettre à jour sa table d'interface sortante en incluant le port et l'IP de destination dudit récepteur supplémentaire et dupliquer les paquets entrants provenant de ladite session déjà active pour les retransmettre audit récepteur supplémentaire.

15. Appareil selon l'une quelconque des revendications 1 à 14, dans lequel
le chemin d'une session passe par des domaines multiples ; et
lesdits agents de réseau sont situés aux bords desdits domaines.

16. Programme informatique comprenant un code de programme informatique qui, lorsqu'il est exécuté, permet à un ordinateur d'effectuer un procédé selon l'une quelconque des revendications 1 à 8.
